# EUROPÄISCHE PATENTSCHRIFT

(11) **EP 2 397 211 B1**
(45) Veröffentlichungstag und Bekanntmachung des Hinweises auf die Patenterteilung: **15.07.2015**
(21) Anmeldenummer: 11168019.5
(22) Anmeldetag: 30.05.2011
(51) Int. Cl.: B01D 46/10, B01D 46/52, B01D 46/00

(54) **Innenraumluftfilterelement, Filteraufnahme, Filteranordnung und Verfahren zum Herstellen des Innenraumluftfilterelements**
Internal area air filtering element, filter holder, filter assembly and method for producing the internal area air filtering element
Elément de filtration d'air d'espace intérieur, réception de filtre, agencement de filtre et procédé de fabrication de l'élément de filtration d'espace intérieur

(30) Priorität: 17.06.2010 DE 102010024093
(43) Veröffentlichungstag der Anmeldung: 21.12.2011
(73) Patentinhaber: Mann + Hummel GmbH, 71638 Ludwigsburg (DE)
(72) Erfinder: Ammersdörfer, Micha, 70327 Stuttgart (DE)

(56) Entgegenhaltungen:
- EP-A2- 1 431 090
- WO-A1-2009/063875
- DE-A1- 10 336 378
- DE-A1-102005 044 491
- DE-U1-202005 013 646
- US-A1- 2006 201 120
- US-B1- 6 485 538

## Beschreibung

### Technisches Gebiet

Die vorliegende Erfindung betrifft ein Fluidfilterelement, insbesondere ein Innenraumluftfilterelement, eine Filteraufnahme zur Aufnahme des Innenraumluftfilterelements und eine Filteranordnung, welche das Innenraumluftfilterelement und die Filteraufnahme umfasst. Ferner betrifft die Erfindung ein Verfahren zum Herstellen eines Innenraumluftfilterelements.

Im Automobilbereich werden regelmäßig Filterelemente aus gefaltetem oder plissiertem Filtermedium, wie zum Beispiel Filtervliesmaterial, eingesetzt, um Fluide, wie z.B. Kraftstoff, Betriebsmittel oder Innenraumluft, zu filtern. Das Filtervliesmaterial ist dabei beispielsweise in der Art eines Faltenpacks gefaltet. Dadurch wird eine Filterfläche, die von dem zu filternden Fluid durchströmt wird, bei geringem Platzbedarf des Filterelements relativ groß. Es kann dann notwendig sein, Seiten, Kanten und/oder Endabschnitte des Faltenpacks mit Hilfe von Seitenbändern oder Kopfbändern zu stabilisieren, die beispielsweise auf ein Faltenprofil des Faltenpacks aufgebracht werden.

Die Seitenbänder können dabei aus dem gleichen Material wie das Faltenpack oder aus einem anderen Material, beispielsweise Kunststoff, oder geschäumten Materialien, gebildet sein. Zur weiteren Stabilisierung kann auch ein fester Rahmen vorgesehen sein. Es ist häufig notwendig, das sich ergebende Filterelement an die Einbaugegebenheiten anzupassen, wobei insbesondere eine Durchströmrichtung für das zu filternde Fluid definiert wird.

Bei bestimmungsgemäßen Einsatz in einem Kraftfahrzeug sind die Filterelemente regelmäßig in einer zur Aufnahme der Filterelemente vorgesehene Filteraufnahme oder einem Filtergehäuse angeordnet. Bei dem Anordnen eines Filterelements in der Filteraufnahme kann es wichtig sein, dass das Filterelement richtig orientiert in der Filteraufnahme aufgenommen ist, insbesondere, wenn eine optimale Filterwirkung nur in einer vorgegebenen Durchströmrichtung erzielt wird.

### Stand der Technik

Es ist bekannt, um beim Austausch eines mit Schmutzpartikeln belegten Filterelements gegen ein neues Filterelement eine falsche Montage des neuen Filterelements zu verhindern, indem Markierungen an dem Filterelement und der Filteraufnahme vorgesehen sind.

Aus der EP 1 431 090 A2 ist ein Filterelement bekannt, das an wenigstens einer Seite lateral durch einen senkrecht zur Filterebene ausgerichteten Randstreifen begrenzt wird. Eine Dichtlasche ist Teil des Randstreifens und ragt über die Filterebene hinaus. Die Dichtlasche wird durch den Verlauf einer Sollknickstelle definiert, wobei im Bereich der Sollknickstelle eine Versteifung ausgebildet ist und die Sollknickstelle als Verdünnung des Materials ausgebildet sein kann

Es ist Aufgabe der vorliegenden Erfindung, eine verbesserte Möglichkeit zu schaffen, Filterelemente in der gewünschten Orientierung in Filteraufnahmen einzusetzen.

### Offenbarung der Erfindung

Diese Aufgabe wird durch ein Filterelement gemäß Patentanspruch 1 gelöst.

Demgemäß ist ein Fluidfilterelement angegeben, insbesondere ein Innenraumluftfilterelement, welches ein zwischen zwei Seitenbändern angeordnetes Faltenpack aufweist, wobei mindestens eines der Seitenbänder an einer von dem Faltenpack abgewandten Seite eine Nut aufweist.

Gelöst wird diese Aufgabe durch ein Innenraumfilterelement mit mindestens einem Seitenband, welches an einer vom Faltenpack abgewandten Seite eine Nut zum Zusammenwirken mit einem Federelement einer Filteraufnahme aufweist, wobei das Seitenband einen Vliesstreifen umfasst. Die Nut kann in den Vliesstreifen z.B. durch thermisches Umformen, Abschmelzen des Vlieses mittels z.B. einer heißen Rolle oder auch durch Entfernen, z.B. Herausschneiden, von Vliesmaterial erzeugt werden.

Die Nut ist vorzugsweise derart angeordnet und ausgebildet, dass sie in Zusammenwirken mit einem zu der Nut korrespondierenden Federelement an einer Innenseite einer Filteraufnahme ein Einbauen des Fluidfilterelements mit falscher Orientierung verhindert. Dadurch trägt die Nut in Zusammenwirken mit dem Federelement dazu bei, dass das Fluidfilterelement richtig orientiert in der Filteraufnahme eingebaut ist, wobei für den sich ergebenden Verdrehschutz kein zusätzliches Bauteil oder zusätzlicher Arbeitsaufwand bei der Herstellung nötig ist. Die richtige Orientierung ist dabei insbesondere durch eine vorgegebene gewünschte Durchströmrichtung beim Betrieb des Filters gegeben, in der das zu filternde Fluid das Fluidfilterelement bei bestimmungsgemäßem Einsatz durchströmt.
Das Fluid umfasst Innenraumluft. Das Fluidfilterelement ist dementsprechend beispielsweise ein Innenraumluftfilter für ein Kraftfahrzeug. Ein Filtermaterial des Faltenpacks weist beispielsweise ein plissiertes Filtervlies auf, wobei das Faltenpack beispielsweise zickzackförmig ausgebildet ist.

Bei einer vorteilhaften Ausführungsform weisen beide Seitenbänder des Fluidfilterelements als Verdrehschutz jeweils eine Nut auf. Dadurch kann eine Montage in nicht gewünschter Orientierung in Bezug auf eine Anströmseite des Filterelements in einem Filtergehäuse zusätzlich erschwert werden. Man erzielt daher einen zuverlässigen Verdrehschutz für das vorgeschlagene Filterelement.

Damit das Fluidfilterelement trotz der Maßnahmen für den Verdrehschutz einfach in die Filteraufnahme eingeschoben werden kann, erstreckt sich die Nut zum Beispiel bis hin zu einer Seitenkante des entsprechenden Seitenbandes. Die Seitenkante ist die Kante des Seitenbandes, die beim Einbauen als erstes vollständig in die Filteraufnahme eingeschoben wird. Aufgrund der sich bis zur Seitenkante erstreckenden Nut, ist die Nut seitlich in Einschubrichtung geöffnet. Die seitlich offene Nut ermöglicht, dass ein korrespondierendes Federelement der Filteraufnahme einfach von der Nut aufgenommen werden kann.

Die Nut und das Federelement können sich auch über die gesamte Länge des Seitenbandes bzw. der entsprechenden Innenseite der Filteraufnahme erstrecken.

Bei einer Ausführungsform des Filterelements ist die Nut in der Höhe des entsprechenden Seitenbandes von der Mitte des Seitenbandes versetzt ausgebildet. Die Höhe des Seitenbandes ist durch eine Länge der Seitenkante vorgegeben. Die Höhe des Seitenbandes erstreckt sich beispielsweise in eine Richtung, auf der die Einschubrichtung und die Falze oder Faltkanten des Faltenpackes senkrecht stehen, und die parallel zu der Seitenkante des Seitenbandes ist. Die außermittige Anordnung der Nut trägt auf einfache Weise dazu bei, dass das Fluidfilterelement ausschließlich richtig orientiert in der Filteraufnahme aufgenommen werden kann. Insofern ist die Nut asymmetrisch in oder an dem Seitenband angeordnet.

Die Nut kann in dem Seitenband ausgebildet sein, indem das Material des Seitenbandes im Bereich der zu formenden Nut verdichtet, verformt, geschmolzen und/oder entfernt und somit ausgenommen ist. Das Seitenband mit der Nut ist ferner materialeinstückig ausgebildet.

Es wird ferner eine Filteraufnahme zur Aufnahme des Fluidfilterelements vorgeschlagen, wobei an einer Innenseite der Filteraufnahme ein Federelement ausgebildet ist, welches mit einer Nut des Filterelements zusammen wirken kann. Beispielsweise ermöglicht das Zusammenwirken der Nut des Fluidfilterelements mit dem Federelement den ausschließlich korrekten Einbau des Fluidfilterelements hinsichtlich seiner Orientierung in der Filteraufnahme. Die Nut und das Federelement können so ausgebildet sein, dass kein oder nur vernachlässigbar wenig zu filterndes Fluid an dem Filtermaterial vorbeiströmen kann. Insbesondere können die Nut und das Federelement fluiddicht zusammenwirken.

Durch die Feder-Nutkombination wird somit neben einem potenziellen Verdrehschutz eine gute Abdichtung zwischen dem Filterelement und der Filteraufnahme erreicht.

Es wird außerdem eine Filteranordnung oder ein Filtersystem offenbart, welche das Fluidfilterelement und eine Filteraufnahme umfasst. Dabei hat mindestens eines der Seitenbänder des Filterelements an einer von dem Faltenpack abgewandten Seite eine Nut, und die Filteraufnahme umfasst ein Federelement zum Zusammenwirken mit der Nut.

Bei einem Verfahren zum Herstellen des Fluidfilterelements wird eine Nut in einem Seitenband des Filterelements durch thermische und/oder plastische Verformung oder durch Materialwegnahme ausgebildet.

Dabei kann das Material des Seitenbandes im Bereich der zu formenden Nut beispielsweise mit Hilfe einer heißen Walze, einem heißen Rad, einem heißen Stempel, einer heißen Rolle, einer heißen Kufe oder einer heißen Schiene irreversibel eingedrückt werden oder mit Hilfe eines Laserstrahls oder Heißluft eingeschmolzen werden. Alternativ dazu kann die Nut ausgebildet werden, indem im Bereich der zu formenden Nut das Material des Seitenbandes entfernt wird, beispielsweise mit Hilfe einer Fräse. Das Hilfsmittel, mit dem die Nut ausgebildet wird, kann in seinem Arbeitsbereich so beschichtet sein, dass kein erwärmtes und/oder angeschmolzenes Filtervliesmaterial an dem entsprechenden Werkzeug kleben bleibt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1 eine perspektivische Darstellung einer ersten Ausführungsform eines Fluidfilterelements;
Fig. 2 eine perspektivische Darstellung einer ersten Ausführungsform einer Filteranordnung mit der ersten Ausführungsform des Fluidfilterelements und mit einer ersten Ausführungsform einer Filteraufnahme;
Fig. 3 eine Detailansicht eines Querschnitts der ersten Ausführungsform der Filteranordnung;
Fig. 4 eine Detailansicht eines Querschnitts einer zweiten Ausführungsform der Filteranordnung;
Fig. 5 eine Detailansicht eines Querschnitts einer dritten Ausführungsform der Filteranordnung;
Fig.6 eine Detailansicht eines Querschnitts einer vierten Ausführungsform der Filteranordnung;
Fig. 7 eine Detailansicht eines Querschnitts einer fünften Ausführungsform der Filteranordnung;
Fig. 8 eine Detailansicht eines Querschnitts einer sechsten Ausführungsform der Filteranordnung;
Fig. 9 eine Vorderansicht auf eine zweite Ausführungsform des Fluidfilterelements;
Fig. 10 eine perspektivische Darstellung einer dritten Ausführungsform des Fluidfilterelements; und
Fig. 11 eine perspektivische Darstellung einer siebten Ausführungsform der Filteranordnung.

In den Figuren sind gleiche oder funktionsgleiche Elemente, sofern nichts Anderes angegeben ist, mit denselben Bezugszeichen versehen worden.

### Ausführungsform(en) der Erfindung

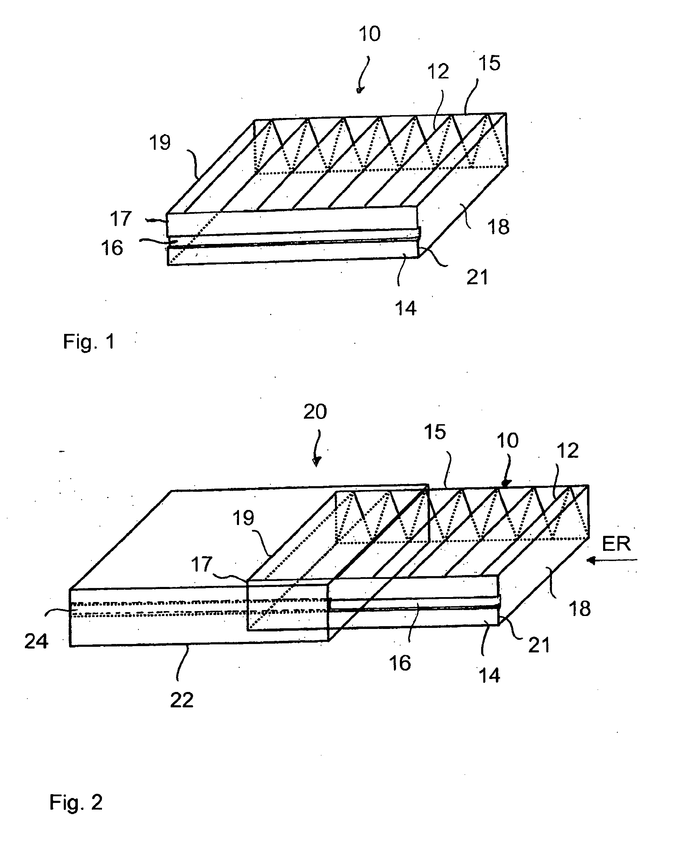

Figur 1 zeigt eine erste Ausführungsform eines Fluidfilterelements, insbesondere eines Innenraufluftfilterelements für ein Kraftfahrzeug. Das Innenraumluftfilterelement 10 besteht im Wesentlichen aus einem Faltenpack 12, das aus Filtermaterial, insbesondere Filtervliesmaterial und/oder Kunststoffvliesmaterial gebildet ist. Das Filtervliesmaterial ist entlang parallel zueinander verlaufender Falze insbesondere zickzackförmig gefaltet, oder plissiert. Alternativ dazu kann der Faltenpack 12 auch anders, beispielsweise wellenförmig ausgeführt sein. Auf dem zickzackförmigen Profil des Faltenpacks 12 sind auf beiden Seiten des Faltenpacks 12 Seitenbänder, insbesondere ein erstes Seitenband 14 und ein zweites Seitenband 15 aufgebracht. Die Seitenbänder 14, 15 sind beispielsweise mit Hilfe von Heißkleber oder einem anderen geeigneten Klebstoff an dem Faltenpack 12 befestigt. Ferner können auch an einem ersten Endabschnitt 19 oder einem zweiten Endabschnitt 18 des Faltenpacks 12 Versteifungen durch Kopf- oder Stirnbänder vorgesehen werden.

Das Innenraumluftfilterelement 10 eignet sich zum Filtern von Luft, insbesondere von Luft, die zum Versorgen eines Innenraums, beispielsweise in einem Kraftfahrzeug, vorgesehen ist. Alternativ dazu können mit dem Innenraumluftfilterelement 10 eine Vielzahl anderer Fluide, beispielsweise Kraftstoff oder andere Betriebsmittel eines Kraftfahrzeugs, gefiltert werden. Ferner kann das Innenraumluftfilterelement 10 auch außerhalb eines Kraftfahrzeugs verwendet werden, beispielsweise zum Filtern der Luft für einen Wohn- oder Arbeitsraum. Das zu filternde Fluid soll das Filtermaterial des Faltenpacks 12 meist in einer vorgegebenen Anströmrichtung anströmen. Die gewünschte Durchströmrichtung des Fluids durch das Filtermaterial hängt dabei von den jeweiligen Einbaugegebenheiten ab. Bei mehrlagigen Filtermedien kann die gewünschte Durchströmrichtung auch von dem Filtermaterial selbst abhängen, um eine optimale Filterwirkung zu erreichen. Deshalb ist es wünschenswert, dass das Fluidfilterelement zum bestimmungsgemäßen Einsatz richtig orientiert eingebaut ist.

Das Innenraumluftfilterelement 10 weist an dem ersten Seitenband 14 eine erste Nut 16 auf, die zu einem Verdrehschutz und somit zu einem korrekten Einbau des Innenraumluftfilterelements 10 beiträgt. Die erste Nut 16 erstreckt sich von einer ersten Kante 17 des ersten Seitenbandes 14 bis hin zu einer zweiten gegenüberliegenden Kante 21 des ersten Seitenbandes 14. Die erste Nut 16 ist seitlich in Einschubrichtung ER offen. Bezogen auf eine Höhe des ersten Seitenbandes 14, die durch eine Länge der ersten und der zweiten Kante 17, 21 gegeben ist, ist die erste Nut 16 aus der Mitte des ersten Seitenbandes 14 leicht nach unten versetzt angeordnet. Die erste Nut 16 und das erste Seitenband 14 sind materialeinstückig ausgebildet.

Die erste Nut 16 kann vor oder nach der Montage der Seitenbänder 14, 15 an dem Faltenpack 12 in das erste Seitenband 14 eingebracht werden. Dazu kann das Material des ersten Seitenbandes 14 im Bereich der zu formenden ersten Nut 16 verformt, geschmolzen oder weggenommen, also entfernt werden. Ist das erste Seitenband 14 beispielsweise aus Vliesmaterial gebildet, so weist das Vliesmaterial zwar lokal eine stark variierende Dichte auf, im Mittel über das gesamte erste Seitenband 14 außerhalb der Nut 16 ist die Materialdichte jedoch konstant. Falls die erste Nut 16 durch Verformung des Seitenbandmaterials ausgebildet ist, so ist die Dichte des Seitenbandmaterials im Bereich der ersten Nut 16 verglichen mit einem Bereich des ersten Seitenbandes 14, der von der ersten Nut 16 beabstandet ist, stark erhöht. Falls das Seitenbandmaterial Maschen aufweist, so sind diese unter Ausbildung der ersten Nut 16 im Bereich der ersten Nut 16 stark verdichtet und versteift.

Zum Formen und/oder Schmelzen der Nut 14 eignet sich eine heiße Walze, eine heiße Rolle, eine heiße Kufe, eine heiße Schiene, ein heißer Stempel, ein Laser oder auch Heißluft. Zum Entfernen von Seitenbandmaterial eignet sich beispielsweise eine Fräse.

Das Werkzeug, das zum Herstellen der ersten Nut 16 verwendet wird, kann in einem Bereich, in dem das Werkzeug mit dem ersten Seitenband 14 in Kontakt kommt, derart beschichtet sein, dass das Seitenbandmaterial nicht an dem entsprechenden Werkzeug haften bleibt.

Figur 2 zeigt eine erste Ausführungsform einer Filteranordnung bzw. eines Filtersystems 20, das das Innenraumluftfilterelement 10 und eine Filteraufnahme 22 zur Aufnahme des Innenraumluftfilterelements 10 umfasst. Die Filteraufnahme 22 weist an einer ihrer Innenseiten ein Federelement 24 auf, das von einer Innenwandung der Filteraufnahme 22 weg in den Innenraum der Filteraufnahme 22 ragt, und das bezüglich einer Höhe senkrecht zu der Erstreckungsrichtung des Federelements 24 aus der Mitte nach unten versetzt angeordnet ist. Es ergibt sich somit korrespondierend zu der ersten Nut 16 eine Feder 24. Das Innenraumluftfilterelement 10 ist entlang der Einschubrichtung ER in etwa halb in die Filteraufnahme eingeschoben dargestellt, so dass das Federelement 24 zur Hälfte von der ersten Nut 16 aufgenommen ist. Das Federelement 24 und die erste Nut 16 wirken aufgrund ihrer außermittigen Anordnung derart zusammen, dass eine Orientierung des eingeschobenen Innenraumluftfilterelements 10 fest vorgegeben ist. Ein verdrehtes Einbauen des Innenraumluftfilterelements 10 ist somit wirksam unterbunden.

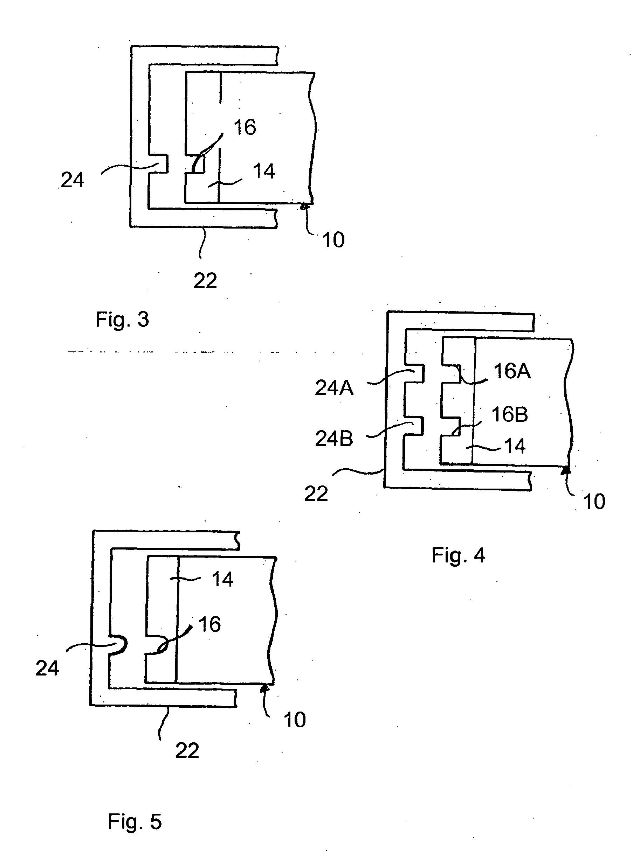

Figur 3 zeigt eine Detailansicht eines Querschnitts durch die erste Ausführungsform des Filtersystems 20, die ein Profil der ersten Nut 16 und des dazu korrespondierenden Federelements 24 zeigt. Die beiden Profile sind bei dieser Ausführungsform rechteckig, insbesondere quadratisch ausgebildet. Ferner sind die Ausmaße der ersten Nut 16 etwas größer als die des Federelements 24, damit das Innenraumluftfilterelement 10 einfach in die Filteraufnahme 22 eingeschoben werden kann. Beispielsweise können die erste Nut 16 und das Federelement 24 gemäß einer Spielpassung zueinander ausgebildet sein. Alternativ dazu können die erste Nut 16 und das Federelement 24 so zueinander ausgebildet sein, dass sie dichtend zusammenwirken, wodurch ein Strömen des zu filternden Fluids durch einen Spalt zwischen der ersten Nut 16 und dem Federelement 24 und somit vorbei am Faltenpack 12 verhindert wird. Beispielsweise können die erste Nut 16 und das Federelement 24 gemäß einer Übermaßpassung ausgebildet sein.

Figur 4 zeigt eine Detailansicht eines Querschnitts durch eine zweite Ausführungsform des Filtersystems 20. Bei dieser Ausführungsform weist das erste Seitenband 14 zwei erste Nuten 16A, 16B auf, und die Filteraufnahme 22 weist zwei dazu kompatible Federelemente 24A, 24B auf. Die beiden Profile sind bei dieser Ausführungsform wiederum rechteckig, insbesondere quadratisch ausgebildet.

Figur 5 zeigt eine Detailansicht eines Querschnitts durch eine dritte Ausführungsform des Filtersystems 20. Die Profile der ersten Nut 16 und des Federelements 24 sind bei dieser Ausführungsform kreisförmig, insbesondere oval und/oder halbkreisförmig ausgebildet.

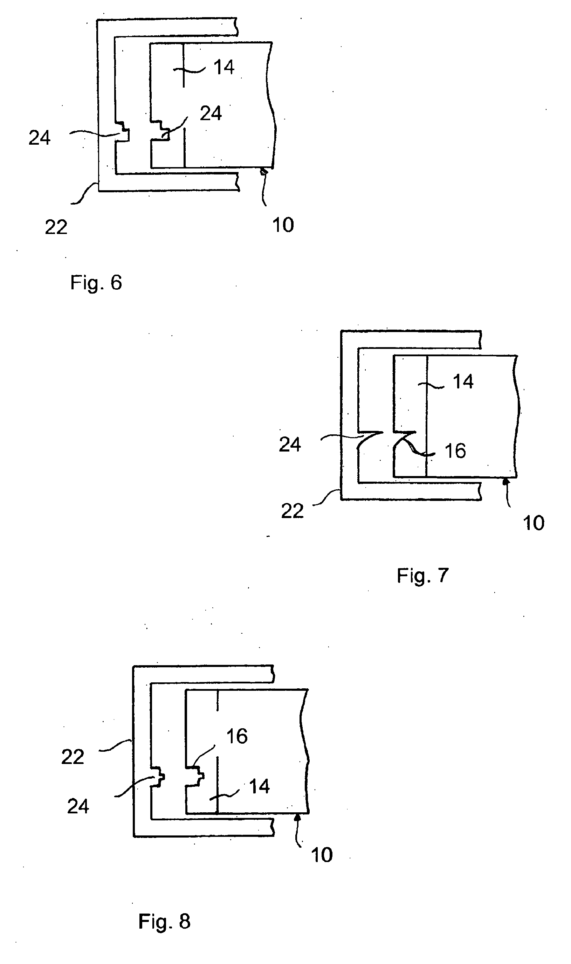

Figur 6 zeigt eine Detailansicht eines Querschnitts durch eine vierte Ausführungsform des Filtersystems 20. Die Profile der ersten Nut 16 und des Federelements 24 sind bei dieser Ausführungsform eckig gestuft, insbesondere mit einer Stufe ausgebildet.

Figur 7 zeigt eine Detailansicht eines Querschnitts durch eine fünfte Ausführungsform des Filtersystems 20. Die Profile der ersten Nut 16 und des Federelements 24 sind bei dieser Ausführungsform eckig spitz zulaufend, einerseits rechtwinklig zu dem ersten Seitenband 14 und andererseits von der Spitze aus stetig abfallend ausgebildet.

Figur 8 zeigt eine Detailansicht eines Querschnitts durch eine sechste Ausführungsform des Filtersystems 20. Die Profile der ersten Nut 16 und des Federelements 24 sind bei dieser Ausführungsform eckig gestuft, insbesondere mit zwei symmetrisch zueinander angeordneten Stufen ausgebildet.

Die vorgenannten Ausführungsformen der ersten Nut 16 und des Federelements 24 können auch variiert oder miteinander kombiniert werden. Beispielsweise können an dem ersten Seitenband 14 zu jedem Profil zwei oder mehr erste Nuten 16 vorgesehen sein, wobei bei unterschiedlichen ersten Nuten 14 unterschiedliche Profile verwendet werden können. Ferner können Profile verwendet werden, die nicht in den Ausführungsbeispielen gezeigt sind. Alle Nut- und Feder-Varianten können sowohl dichtend als auch nicht dichtend ausgebildet sein.

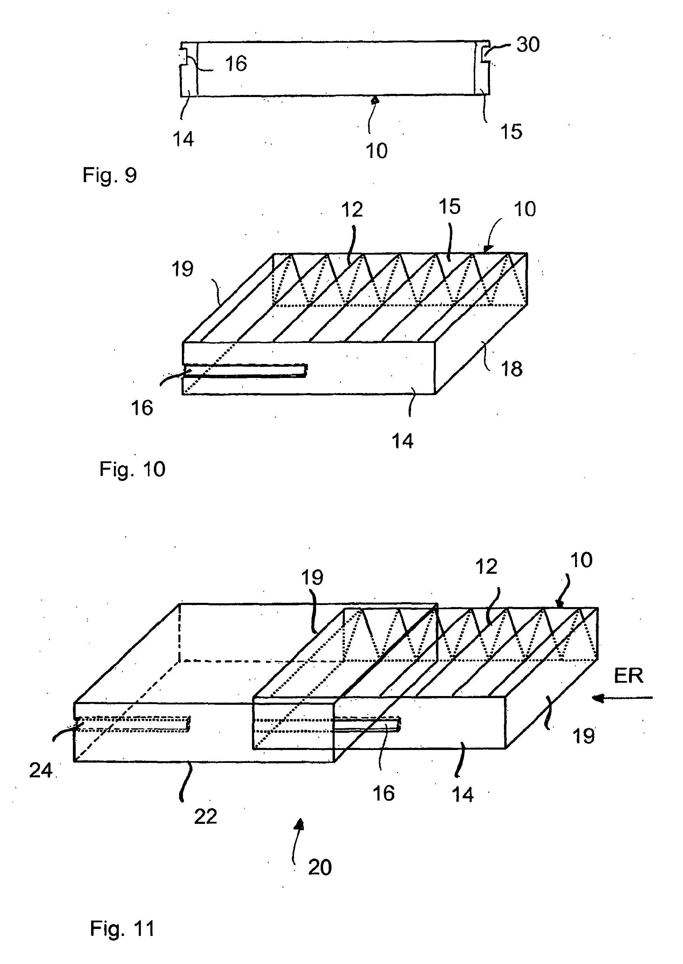

Figur 9 zeigt eine Vorderansicht einer zweiten Ausführungsform des Innenraumluftfilterelements 10. Die zweite Ausführungsform umfasst zusätzlich zur ersten Nut 16 am ersten Seitenband 14 eine zweite Nut 30 am zweiten Seitenband 15. Beide Nuten 16, 30 sind bezüglich der Höhe der Seitenbänder 14, 15 aus der Mitte nach oben versetzt angeordnet. Die Form der zweiten Nut 30 und die Anzahl von Nuten am zweiten Seitenband 15 kann entsprechend der Form und der Anzahl der ersten Nut 16 variiert werden.

Figur 10 zeigt eine dritte Ausführungsform des Innenraumluftfilterelements 10, bei der sich die erste Nut 16 lediglich über die Hälfte der Länge des ersten Seitenbandes 14 erstreckt.

Figur 11 zeigt eine siebte Ausführungsform des Filtersystems 20, bei der die dritte Ausführungsform des Innenraumluftfilterelements 10 zur Hälfte in eine dazu korrespondierende zweite Ausführungsform der Filteraufnahme 22 eingeführt ist.

Die Erfindung ist nicht auf die angegebenen Ausführungsformen und -beispiele beschränkt. Beispielsweise können die Ausführungsformen miteinander kombiniert werden und die Form, die Anzahl und die Länge der ersten und/oder zweiten Nut 16, 30 können variiert werden.

## Patentansprüche

1. Innenraumluftfilterelement (10), mit zumindest zwei Seitenbändern (14, 15) und einem Faltenpack (12), welches zwischen den zumindest zwei Seitenbändern (14, 15) angeordnet ist, wobei mindestens eines der Seitenbänder (14, 15) an einer von dem Faltenpack (12) abgewandten Seite eine Nut (16, 30) zum Zusammenwirken mit einem Federelement (24) einer Filteraufnahme (22) aufweist und wobei das Seitenband (14, 15) einen Vliesstreifen umfasst und die Nut (16, 30) in den Vliesstreifen erzeugt ist.

2. Innenraumluftfilterelement (10) nach Anspruch 1, wobei die beiden Seitenbänder (14, 15) an den von dem Faltenpack (12) abgewandten Seiten der Seitenbänder (14, 15) eine Nut (16, 30) aufweisen.

3. Innenraumluftfilterelement (10) nach einem der Ansprüche 1 oder 2, bei dem sich die Nut (16, 30) bis zu einer Seitenkante des mindestens einen Seitenbandes (14, 15) erstreckt.

4. Innenraumluftfilterelement (10) nach einem der Ansprüche 1 bis 3, wobei die Nut (16, 30) in der Höhe des mindestens einen Seitenbandes (14, 15) von der Mitte versetzt ausgebildet ist.

5. Innenraumluftfilterelement (10) nach einem der Ansprüche 1 bis 4, wobei die Nut (16, 30) durch verdichtetes, verformtes, geschmolzenes und/oder entferntes Seitenbandmaterial gebildet ist.

6. Filteranordnung (20) mit einem Innenraumluftfilterelement (10) nach einem der Ansprüche 1 bis 5 und einer Filteraufnahme (22) zur Aufnahme eines Innenraumluftfilterelements (10), welche an ihrer Innenseite ein Federelement (24) zum Zusammenwirken mit einer Nut (16, 30) des Innenraumluftfilterelements (10) aufweist, wobei das Innenraumluftfilterelement (10) in der Filteraufnahme (22) angeordnet ist und das Federelement (24) der Filteraufnahme (22) in der Nut (16, 30) des Innenraumluftfilterelements (10) angeordnet ist.

7. Verfahren zum Herstellen eines Innenraumluftfilterelements (10) nach einem der Ansprüche 1 bis 5, wobei eine Nut (16, 30) in einem Seitenband (14, 15) des Innenraumluftfilterelements (10) durch thermische und/oder plastische Verformung oder durch Materialentfernung ausgebildet wird, wobei das Seitenband (14, 15) einen Vliesstreifen umfasst und die Nut (16, 30) in den Vliesstreifen erzeugt wird.

8. Verfahren nach Anspruch 7, wobei die Nut (16, 30) mit Hilfe einer heißen Walze, einer heißen Rolle, einem heißen Rad, einer heißen Schiene oder einer heißen Kufe in dem Seitenband (14, 15) ausgebildet wird.

## Claims

1. Passenger compartment air filter element (10), with at least two lateral strips (14, 15) and one pleated pack (12) which is disposed between the at least two lateral strips (14, 15), wherein at least one of the lateral strips (14, 15) features on a side facing away from the pleated pack (12) a groove (16, 30) for interacting with a spring element (24) of a filter seat (22) and wherein the lateral strip (14, 15) comprises a fleece strip and the groove (16, 30) is incorporated into the fleece strip.

2. Passenger compartment air filter element (10) according to claim 1, wherein the two lateral strips (14, 15) feature a groove (16, 30) on the sides of the lateral strips (14, 15) facing away from the pleated pack (12).

3. Passenger compartment air filter element (10) according to one of the claims 1 or 2 where the groove (16, 30) extends until a lateral edge of the at least one lateral strip (14, 15).

4. Passenger compartment air filter element (10) according to one of the claims 1 to 3, wherein the groove (16, 30) is off-center at the height of the at least one lateral strip (14, 15).

5. Passenger compartment air filter element (10) according to one of the claims 1 to 4, wherein the groove (16, 30) is formed by means of compressed, deformed, melted and/or removed lateral strip material.

6. Filter assembly (20) with a passenger compartment air filter element (10) according to one of the claims 1 to 5 and a filter seat (22) for accommodating a passenger compartment air filter element (10) which features at its interior side a spring element (24) for interacting with a groove (16, 30) of the passenger compartment air filter element (10), wherein the passenger compartment air filter element (10) is disposed in the filter seat (22) and the spring element (24) of the filter seat (22) is disposed in the groove (16, 30) of the passenger compartment air filter element (10).

7. Method for manufacturing a passenger compartment air filter element (10) according to one of the claims 1 to 5, wherein a groove (16, 30) is realized in a lateral strip (14, 15) of the passenger compartment air filter element (10) by thermal and/or plastic deformation or by material removal, wherein the lateral strip (14, 15) comprises a fleece strip and the groove (16, 30) is incorporated into the fleece strip.

8. Method according to claim 7, wherein the groove (16, 30) is incorporated in the lateral strip (14, 15) by means of a hot cylinder, a hot roller, a hot wheel, a hot rail or a hot skid.

## Revendications

1. Elément de filtre à air pour espace intérieur (10), avec au moins deux bandes latérales (14, 15) et un ensemble de plis (12) qui est disposé entre les bandes latérales n (14, 15), au moins au nombre de deux, au moins l'une des bandes latérales (14, 15) présentant, du côté opposé à l'ensemble de plis (12), une rainure (16, 30) interagissant avec un élément de ressort (24) d'un logement de filtre (22) et la bande latérale (14, 15) comprenant une bande de non-tissé et la rainure (16, 30) étant générée dans la bande de non-tissé.

2. Elément de filtre à air pour espace intérieur (10) selon la revendication 1, les deux bandes latérales (14, 15) présentant une rainure (16, 30) des côtés des bandes latérales (14, 15) opposés à l'ensemble de plis (12).

3. Elément de filtre à air pour espace intérieur (10) selon l'une des revendications 1 ou 2, dans lequel la rainure (16, 30) s'étend jusqu'à une arête latérale de la bande latérale (14, 15), au moins au nombre d'une.

4. Elément de filtre à air pour espace intérieur (10) selon l'une des revendications 1 à 3, la rainure (16, 30) étant exécutée de manière décentrée à hauteur de la bande latérale (14, 15), au moins au nombre d'une.

5. Elément de filtre à air pour espace intérieur (10) selon l'une des revendications 1 à 4, la rainure (16, 30) étant formée par un matériau de bande latéral compacté, déformé, fondu et/ou retiré.

6. Agencement de filtre (20) avec un élément de filtre à air pour espace intérieur (10) selon l'une des revendications 1 à 5 et avec un logement de filtre (22) permettant de réceptionner un élément de filtre à air pour espace intérieur (10) présentant sur sa face intérieure un élément élastique (24) interagissant avec une rainure (16, 30) de l'élément de filtre à air pour espace intérieur (10), l'élément de filtre à air pour espace intérieur (10) étant disposé dans le logement de filtre (22) et l'élément élastique (24) du logement de filtre (22) étant disposé dans la rainure (16, 30) de l'élément de filtre à air pour espace intérieur (10).

7. Procédé de fabrication d'un élément de filtre à air pour espace intérieur (10) selon l'une des revendications 1 à 5, une rainure (16, 30) étant exécutée dans une bande latérale (14, 15) de l'élément de filtre à air pour espace intérieur (10) par déformation thermique et/ou plastique ou bien par retrait de matériau, la bande latérale (14, 15) comprenant une bande de non-tissé et la rainure (16, 30) étant générée dans la bande de non-tissé.

8. Procédé selon la revendication 7, la rainure (16, 30) étant exécutée dans la bande latérale (14, 15) à l'aide d'un cylindre chaud, d'un rouleau chaud, d'une roue chaude, d'un rail chaud ou d'un patin chaud.
